# EUROPEAN PATENT SPECIFICATION

(11) **EP 4 268 689 B1**
(45) Date of publication and mention of the grant of the patent: **23.07.2025**
(21) Application number: 23170752.2
(22) Date of filing: 28.04.2023
(51) Int. Cl.: A47J 37/06

(54) **INTEGRATED MULTIFUNCTIONAL VACUUM COOKING MACHINE**
INTEGRIERTE MULTIFUNKTIONALE VAKUUMKOCHMASCHINE
MACHINE DE CUISSON SOUS VIDE MULTIFONCTIONNELLE INTÉGRÉE

(30) Priority: 29.04.2022 CN 202210478761
(43) Date of publication of application: 01.11.2023
(73) Proprietor: Guangzhou Argion Electric Appliance Co., Ltd., Guangzhou, Guangdong 511442 (CN)
(72) Inventor: Liang, Guoqiang, Guangzhou, 511442 (CN); Wu, Yuanchao, Guangzhou, 511442 (CN); Yin, Zhicun, Guangzhou, 511442 (CN)
(74) Representative: Hannke Bittner & Partner mbB Regensburg

(56) References cited:
- CN-A- 111 110 018
- JP-A- 2019 037 815
- KR-A- 20180 088 781

## Description

### TECHNICAL FIELD

The present disclosure relates to the technical field of vacuum cooking, and in particular, to an integrated multifunctional vacuum cooking machine.

### BACKGROUND

Sous Vide (under vacuum) is an innovative cooking technique that yields impressive results. It refers to the process of vacuum-sealing food in a bag, then cooking it to a very precise temperature in a water bath. This technique produces results that are impossible to achieve through any other cooking method. This technique can minimize the loss of moisture and weight of the food materials during cooking, retain the original flavor and nutrients of the food, realize the standardization of cooking skills, reduce the labor cost of catering companies, and achieve a better cooking effect for beginners.

However, it should be noted that to complete the vacuum cooking of the food materials, it is necessary to prepare a vacuum packaging machine and a constant-low-temperature cooking machine. The vacuum machine and vacuum bag can keep the food in a vacuum state, and the constant-low-temperature cooking machine completes the low-temperature heating of the food materials. Obviously, the complicated cooking process takes a long time, has a high cost, and always goes with a poor cooking experience. In addition, the long-term operation requires a large amount of vacuum bags and water, which is not conducive to environmental protection. Furthermore, after the food materials are vacuum-packaged and heated in the cooking machine, the users cannot know the specific temperature of the food materials in time. Instead, they can only estimate the temperature of the food materials by measuring the temperature of the water in the cooking machine, which makes it impossible to achieve accurate control of low-temperature cooking. In addition, some food materials need to be taken out of the vacuum packaging bag after being heated in a water bath, and theirs surfaces should be fried and roasted. At this time, some other devices such as a spray gun, a frying pan, an oven or a toaster are also required, which further complicates the production process, increases the production cost, and compromises the user experience.

In view of the deficiencies of the prior art, there is an urgent need for an integrated multifunctional cooking machine that combines a vacuum preservation process with a low-temperature cooking process to improve the limitations of the existing Sous Vide process.

Patent with publication number of JP2019037815A disclosed a vacuum cooker includes: a cooking tank that stores a food material and can be closed in an airtight manner; decompression means for decompressing an inside of the cooking tank to pressure less than atmospheric pressure; a first temperature sensor for detecting temperature of the food material stored in the cooking tank; a heater for heating the cooking tank of which inside is decompressed by the decompression means; and control means for controlling the heater based on a detection result by the first temperature sensor.

Patent with publication number of CN111110018A disclosed a cooking appliance and a pressure control method for the cooking appliance. The air inlet of the air pump is communicated with the cooking cavity so as to exhaust air to the cooking cavity when the steam channel on the cover body is sealed, so that the inside of the cooking cavity forms a negative pressure state. The control device detects and judges the obtained food amount information in the cooking cavity and controls the air pump to perform negative pressure pumping operation on the cooking cavity according to the preset information. The cooking appliance can ensure that the cooking cavity can keep a desired negative pressure value under the condition that different amounts of food are stored in the cooking cavity, thereby ensuring that the mouthfeel, nutritional indexes and the like are always kept constant.

Patent with publication number of KR20180088781A disclosed a low-temperature vacuum cooker. The disclosed invention comprises: a housing in which a container mounting unit and a vacuum packaging module mounting unit are positioned to be adjacent to each other; a first container coupled to the container mounting unit and provided with a space for accommodating a fluid therein; a heating unit for heating the fluid contained in the first container; a vacuum pressure generating unit installed in the vacuum packaging module mounting unit to suck air in a food packaging container; and a vacuum packaging module installed adjacent to the vacuum pressure generating unit and including a sealing heating unit for heating and sealing the food packaging container. According to the present invention, the vacuum packaging operation can be performed more conveniently and stably.

### SUMMARY

To solve the above technical problems, an objective of the present disclosure is to provide an integrated multifunctional vacuum cooking machine, having advantages such as ingenious structural design and excellent cooking effect.

On this basis, the present disclosure provides an integrated multifunctional vacuum cooking machine, including:
a cooking machine body provided with a heat conducting container configured to accommodate food materials, where the cooking machine body and the heat conducting container define a vacuum cavity configured to process the food materials;
a vacuum pump set provided on the cooking machine body and communicated with the vacuum cavity;
a heating assembly provided on the cooking machine body and configured to heat the vacuum cavity;
a temperature measuring assembly provided on the cooking machine body and configured to measure a temperature of the food materials;
a control system provided on the cooking machine body and electrically connected to the vacuum pump set, the heating assembly, and the temperature measuring assembly;
the cooking machine body includes a base and a top cover, a chamber recessed downward is formed in a top surface of the base, the heat conducting container is disposed in the chamber, the top cover is configured to open and close the chamber, and the top cover and the heat conducting container define the vacuum cavity when the top cover closes the chamber; and
the temperature measuring assembly includes a temperature measuring probe provided in the vacuum cavity, and is electrically connected to the control system and capable of being directly inserted into the food materials, and the temperature measuring probe is movably connected to the top cover and capable of moving in the vacuum cavity according to an instruction of the control system.

In some embodiments of the present disclosure, the integrated multifunctional vacuum cooking machine further includes a sealing ring configured to seal the vacuum cavity, where the sealing ring is disposed on the top cover or the base.

In some embodiments of the present disclosure, the temperature measuring assembly further includes a temperature measuring probe provided below the heat conducting container.

In some embodiments of the present disclosure, a handle is provided on an edge of the heat conducting container.

In some embodiments of the present disclosure, the heating assembly includes an electromagnetic heating coil located below the heat conducting container.

In some embodiments of the present disclosure, a plurality of heat dissipation areas are provided at a bottom of the base.

In some embodiments of the present disclosure, an observation window is formed in a surface of the top cover, and a transparent sealing plate covering the observation window is provided at a top of the top cover.

In some embodiments of the present disclosure, the transparent sealing plate is made of a PP material or a PC material.

Compared with the prior art, the integrated multifunctional vacuum cooking machine provided in the embodiments of the present disclosure has the following beneficial effects:

The present disclosure provides an integrated multifunctional vacuum cooking machine, including a cooking machine body, and a vacuum pump set, a heating assembly, a temperature measuring assembly and a control system provided on the cooking machine body. The cooking machine body has a vacuum cavity, and a heat conducting container is provided in the vacuum cavity. Specifically, the cooking machine body of the present disclosure includes a base and a top cover hinged to each other. A chamber recessed downward is formed in a top surface of the base, and the top cover is configured to open and close the chamber. The base and the top cover are combined to form the vacuum cavity when the top cover closes the chamber. The heat conducting container is disposed in the chamber. The vacuum pump set is disposed in the base and communicated with the vacuum cavity. The heating assembly is disposed in the base and configured to heat the vacuum cavity. The temperature measuring assembly is disposed in the base and configured to measure a temperature in the vacuum cavity and a temperature of food materials. The control system is disposed on the base and electrically connected to the vacuum pump set, the heating assembly, and the temperature measuring assembly. Based on the above structures, when cooking, a user puts the prepared food materials and seasonings into the heat conducting container, opens the top cover, arranges the heat conducting container in the chamber, closes the top cover to seal the vacuum cavity, and waits for a period of time to complete the pickling of the food materials. After that, the vacuum pump set is started to suction air in the vacuum cavity to make the vacuum cavity reach a specified vacuum degree, then the operation of the vacuum pump set is stopped, and the heating assembly is started to continuously and stably heat the heat conducting container at low temperature. At this time, the food materials in the heat conducting container are also continuously and stably heated at low temperature under the heat transfer of the heat conducting container, thereby achieving low-temperature vacuum cooking of the food materials. After the heating is completed, the vacuum pump set is turned on to inflate the vacuum cavity to make the pressure of the vacuum cavity return to an ambient pressure. The top cover is open to take out the food materials. Of course, the user can also choose to activate the heating assembly to heat the food materials in the heat conducting container at high temperature to complete operations such as frying and roasting of the food materials. In this way, the integrated multifunctional vacuum cooking machine is ingenious in structural design, can simultaneously complete low-temperature vacuum cooking of the food materials, and achieves a plurality of purposes. Furthermore, the present disclosure further improves the existing vacuum packaging process and low-temperature cooking process, and vacuum packaging bags are no longer needed for packaging the food materials during vacuum packaging, thereby reducing operations such as bagging and unpacking. Low-temperature heating no longer uses a water bath to heat, but directly uses the heating assembly to heat the food materials in the heat conducting container to achieve water-free low-temperature vacuum cooking of the food materials, thereby effectively improving the existing low-temperature vacuum cooking process, and improving the cooking experience of users.

### BRIEF DESCRIPTION OF THE DRAWINGS

FIG. 1 is a schematic structural diagram of an integrated multifunctional vacuum cooking machine according to an embodiment of the present disclosure;
FIG. 2 is a schematic structural diagram of a top cover of an integrated multifunctional vacuum cooking machine according to an embodiment of the present disclosure; and
FIG. 3 is a schematic structural diagram of a base of an integrated multifunctional vacuum cooking machine according to an embodiment of the present disclosure.

In the figures, 1. Top cover; 11. Sealing ring; 12. Observation window; 13. Transparent sealing plate; 2. Base; 21. Chamber; 22. Heat dissipation area; 23. Cooling fan; 24. Temperature measuring probe; 3. Heat conducting container; 31. Handle; 4. Vacuum pump set; 5. Heating assembly; 51. Electromagnetic heating coil; 6. Temperature measuring assembly; 61. Temperature measuring probe; 7. Control system; 8. Cooking machine body; and 9. Vacuum cavity.

### DETAILED DESCRIPTION

The specific implementations of the present disclosure are described in more detail below with reference to the accompanying drawings and embodiments.

It should be understood that the terms such as "front", "back", and the like are used in the present invention to describe various information, but the information should not be limited to these terms, and these terms are only used to distinguish the same type of information from each other. For example, without departing from the scope of the present disclosure, "front" information may be referred to as "back" information, and "back" information may also be referred to as "front" information.

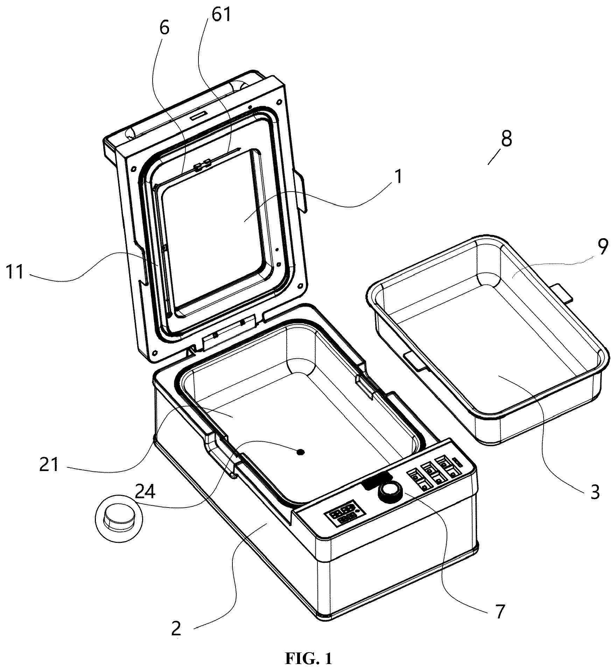

As shown in FIG. 1 to FIG. 3, the present disclosure provides an integrated multifunctional vacuum cooking machine, including a cooking machine body, and a vacuum pump set 4, a heating assembly 5, a temperature measuring assembly 6 and a control system 7 provided on the cooking machine body. The cooking machine body is provided with a heat conducting container 3 configured to accommodate food materials. The cooking machine body and the heat conducting container define a vacuum cavity configured to cook the food materials. Specifically, in the embodiments of the present disclosure, the cooking machine body includes a base 2 and a top cover 1 hinged to each other. A chamber 21 recessed downward is formed in a top surface of the base 2. The heat conducting container 3 is disposed in the chamber 21. The top cover 1 is configured to open and close the chamber 21. The heat conducting container 3 and the top cover 1 define the vacuum cavity when the top cover 1 closes the chamber 21. The vacuum pump set 4 is disposed in the base 2 and communicated with the vacuum cavity. The heating assembly 5 is disposed in the base 2 and configured to heat the vacuum cavity. The temperature measuring assembly 6 is disposed in the base 2 and configured to measure a temperature in the vacuum cavity and a temperature of the food materials. The control system 7 is disposed on the base 2 and electrically connected to the vacuum pump set 4, the heating assembly 5, and the temperature measuring assembly 6.

Based on the above structures, when cooking, a user puts the prepared food materials and seasonings into the heat conducting container 3, opens the top cover 1, arranges the heat conducting container 3 in the chamber 21, closes the top cover 1 to seal the vacuum cavity, and waits for a period of time to complete the pickling of the food materials. After that, the vacuum pump set 4 is started to suction air in the vacuum cavity to make the vacuum cavity reach a specified vacuum degree, then the operation of the vacuum pump set 4 is stopped, and the heating assembly 5 is started to continuously and stably heat the heat conducting container 3 at low temperature. At this time, the food materials in the heat conducting container 3 are also continuously and stably heated at low temperature under the heat transfer of the heat conducting container 3, thereby achieving low-temperature vacuum cooking of the food materials. After the heating is completed, the vacuum pump set 4 is turned on to inflate the vacuum cavity to make the pressure of the vacuum cavity return to an ambient pressure. The top cover 1 is open to take out the food materials. Of course, the user can also choose to activate the heating assembly 5 to heat the food materials in the heat conducting container 3 at high temperature to complete operations such as frying and roasting of the food materials. In this way, the integrated multifunctional vacuum cooking machine is ingenious in structural design, can simultaneously complete vacuum preservation and low-temperature cooking of the food materials, and achieves a plurality of purposes. Furthermore, the present disclosure further improves the existing vacuum packaging process and low-temperature cooking process, and vacuum packaging bags are no longer needed for packaging the food materials during vacuum packaging, thereby reducing operations such as bagging and unpacking. Low-temperature heating no longer uses a water bath to heat, but directly uses the heating assembly 5 to heat the food materials in the heat conducting container 3 to achieve water-free low-temperature vacuum cooking of the food materials, thereby effectively improving the existing low-temperature vacuum cooking process, and improving the cooking experience of users.

Of course, the base 2 and the top cover 1 can be connected in a variety of ways and are not limited to the hinged connection, and the two can also be connected by buckling or clamping.

Furthermore, for the vacuum pump set and the vacuum cavity in the present application, the vacuum pump set 4 is communicated with the vacuum cavity through a pipeline. To ensure the suction effect of the vacuum pump set 4, it is necessary to form, in the top cover 1 or the base 2 that forms the vacuum cavity, a suction hole communicated with the pipeline of the vacuum pump set 4. Specifically, in the embodiments of the present disclosure, the suction hole (not shown in the figures) communicated with the pipeline of the vacuum pump set 4 is formed in the top cover 1. Since the heat conducting container is mostly made of stainless steel or a composite metal plate, only the pressure-bearing requirement of the plastic top cover 1 needs to be considered at this time. This structural design is simpler, the production is easy, and the control of production cost is facilitated. Of course, in the other embodiments of the present disclosure, it is also possible to choose to form, in the base 2, the suction hole communicated with the pipeline of the vacuum pump set 4. At this time, to ensure the suction effect, it is necessary to design a connection structure between the base 2 and the inside of the heat conducting container 3, and meanwhile, it is necessary to take into account the pressure-bearing requirements of the top cover 1 and the base 2 and choose a material having a better pressure-bearing effect to manufacture the base 2.

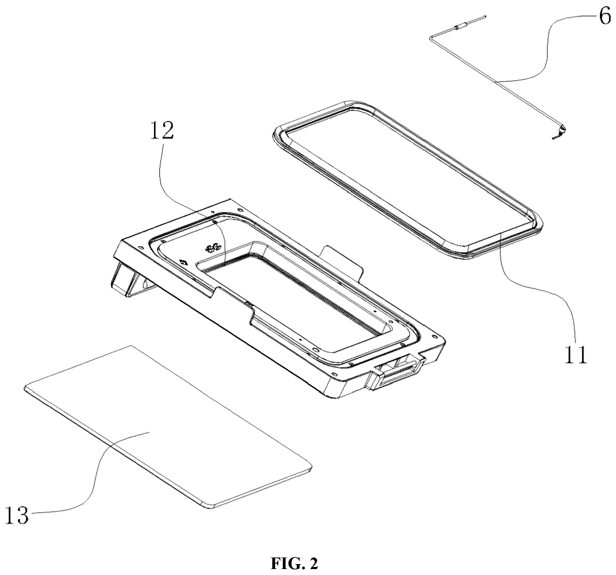

Optionally, to improve the sealing effect on the vacuum cavity and ensure the vacuum degree of the vacuum cavity, as shown in FIG. 1 and FIG. 2, in some embodiments of the present disclosure, a sealing ring 11 around an edge of the heat conducting container 3 is provided at the bottom of the top cover 1. It should be noted that to improve the sealing effect of the sealing ring 11, the setting position of the sealing ring 11 can also be adjusted according to the setting form of the heat conducting container 3. Specifically, in the other embodiments of the present disclosure, the sealing ring 11 can also be disposed at the top of the base 2.

Furthermore, to accurately measure the temperature of the food materials, the temperature measuring assembly 6 may have various structural design forms. As shown in FIG. 1 and FIG. 2, according to the invention, the temperature measuring assembly 6 includes a temperature measuring probe provided on the top cover 1. The temperature measuring probe is movably connected to the top cover 1 and can move in the vacuum cavity according to an instruction of the control system 7. In the past, when the food materials are heated in a water bath at low temperature, the temperature measuring assembly 6 is usually selected to measure the temperature of each part of the water, and the temperature of the food materials is comprehensively confirmed according to the temperature of the water in a water bath pot. However, for the present disclosure, due to the improvement of the structure of the cooking machine and the cooking process, the food materials of the present disclosure are not vacuum-sealed in vacuum packaging bags but are directly placed in the heat conducting container 3. Therefore, the temperature measuring probe can be directly inserted into the food materials to accurately measure the center temperature of the food materials during the low-temperature heating process. The structural design is reliable and ingenious, and the temperature measuring probe has high measurement accuracy and small measurement error.

Furthermore, in some embodiments of the present disclosure, the temperature measuring assembly 6 further includes a temperature measuring probe (not shown in the figures) provided below the heat conducting container 3. The temperature measuring probe can monitor the temperature of the heat conducting container 3, thereby avoiding the damage of the heat conducting container 3 by long-time heating, prolonging the service life of the heat conducting container 3, and then prolonging the service life of the integrated multifunctional cooking machine.

Of course, the setting position of the temperature measuring probe in the present disclosure should also not be fixed. To obtain a better temperature measuring effect, the mounting position of the temperature measuring probe can be adjusted according to specific situations. That is, the temperature measuring probe can be disposed on the top cover 1 or the base 2. Moreover, to better achieve temperature measurement and transfer of the temperature measuring probe, part of the temperature measuring probe can also be electrically connected to the control system 7 by means of a wireless sensing structure such as a bluetooth module.

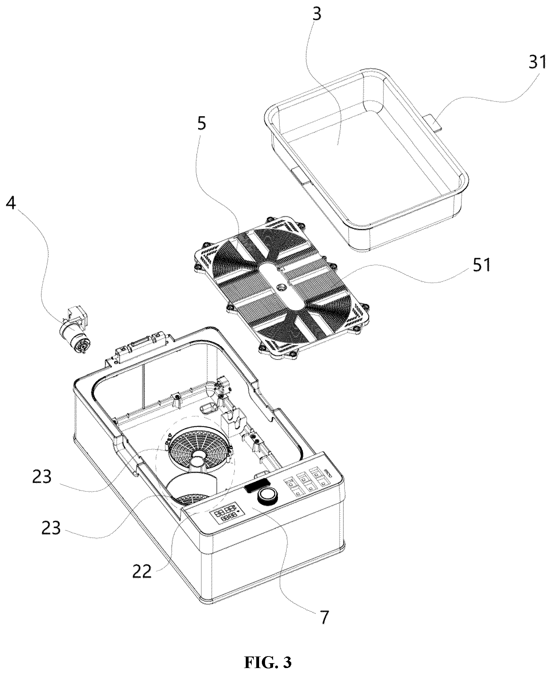

Optionally, as shown in FIG. 3, in some embodiments of the present disclosure, to facilitate the operation of the user, a handle 31 is provided on an edge of the heat conducting container 3, and the user can complete the lifting and placement of the heat conducting container 3 through the handle 31, such that the structural design is ingenious, and the use experience is good.

Furthermore, the heating assembly 5 of the present disclosure also includes a plurality of structural designs. Specifically, in the embodiments of the present disclosure, as shown in FIG. 3, the heating assembly 5 includes an electromagnetic heating coil, which is provided below the heat conducting container 3, and can heat the heat conducting container 3, thereby heating the food materials in the heat conducting container 3. Of course, to achieve a better heating effect of the heat conducting container 3 and the vacuum cavity, the setting position of the electromagnetic heating coil can also be adjusted. That is, the electromagnetic heating coil of the heating assembly 5 can also be disposed beside the heat conducting container 3. In the present disclosure, arranging the electromagnetic heating coil below the heat conducting container 3 is also a preferred result after repeated trials and tests.

Furthermore, a plurality of heat dissipation areas 22 are provided at the bottom of the base 2 on the basis of the settings of the heat conducting container 3 and the electromagnetic heating coil. Some of the heat dissipation areas 22 are provided with cooling fans. When the heating assembly 5 is started, the cooling fans are started at the same time, which can effectively reduce the temperature of the electromagnetic heating coil, thereby avoiding the influence of overheating on normal use of the cooking machine.

In addition, in some embodiments of the present disclosure, an observation window 12 is formed in a surface of the top cover 1. The user can visually understand the situation in the vacuum cavity in time through the observation window 12, and determine the cooking degree of the food materials. Obviously, to ensure the sealing and observation effect, a transparent sealing plate 13 covering the observation window 12 is provided at the top of the top cover 1. Specifically, in some embodiments of the present disclosure, the transparent sealing plate 13 is made of a PP material or a PC material. The raw material is common and easily available, the manufacturing is convenient, and the cost control is facilitated.

In conclusion, the present disclosure provides an integrated multifunctional vacuum cooking machine, including a cooking machine body, and a heat conducting container, a vacuum pump set, a heating assembly, a temperature measuring assembly and a control system provided on the cooking machine body. The cooking machine body includes a base and a top cover hinged to each other. A chamber recessed downward is formed in a top surface of the base, and the top cover is configured to open and close the chamber. The top cover and the heat conducting container define a vacuum cavity when the top cover closes the chamber. The vacuum pump set is disposed in the base and communicated with the vacuum cavity. The heating assembly is disposed in the base and configured to heat the vacuum cavity. The temperature measuring assembly is disposed in the base and configured to measure a temperature in the vacuum cavity and a temperature of food materials. The control system is disposed on the base and electrically connected to the vacuum pump set, the heating assembly, and the temperature measuring assembly. Compared with the prior art, the integrated multifunctional vacuum cooking machine is ingenious in structural design, can simultaneously complete vacuum preservation and low-temperature cooking of the food materials, and achieves a plurality of purposes. Furthermore, the present disclosure further improves the existing vacuum packaging process and low-temperature cooking process, and vacuum packaging bags are no longer needed for packaging the food materials during vacuum packaging, thereby reducing operations such as bagging and unpacking. Low-temperature heating no longer uses a water bath to heat, but directly uses the heating assembly to heat the food materials in the heat conducting container to achieve water-free low-temperature vacuum cooking of the food materials, thereby effectively improving the existing low-temperature vacuum cooking process, and improving the cooking experience of users.

## Claims

1. An integrated multifunctional vacuum cooking machine, **characterized in that** the integrated multifunctional vacuum cooking machine comprising:
a cooking machine body (8) provided with a heat conducting container (3) configured to accommodate food materials, wherein the cooking machine body (8) and the heat conducting container (3) define a vacuum cavity (9) configured to process the food materials;
a vacuum pump set (4) provided on the cooking machine body (8) and communicated with the vacuum cavity (9);
a heating assembly (5) provided on the cooking machine body (8) and configured to heat the food materials in the vacuum cavity (9) through the heat conducting container (3);
a temperature measuring assembly (6) provided on the cooking machine body (8) and configured to measure a temperature of the food materials;
a control system (7) provided on the cooking machine body (8) and electrically connected to the vacuum pump set (4), the heating assembly (5), and the temperature measuring assembly (6);
wherein the cooking machine body (8) comprises a base (2) and a top cover (1), a chamber (21) recessed downward is formed in a top surface of the base (2), the heat conducting container (3) is disposed in the chamber (21), the top cover (1) is configured to open and close the chamber (21), and the top cover (1) and the heat conducting container (3) define the vacuum cavity (9) when the top cover (1) closes the chamber (21);
**characterised in that**
the temperature measuring assembly (6) comprises a temperature measuring probe (61) provided in the vacuum cavity (9), and is electrically connected to the control system (7) and capable of being directly inserted into the food materials, and the temperature measuring probe (61) is movably connected to the top cover (1) and capable of moving in the vacuum cavity (9) according to an instruction of the control system (7).

2. The integrated multifunctional vacuum cooking machine according to claim 1, further comprising a sealing ring (11) configured to seal the vacuum cavity (9), wherein the sealing ring (11) is disposed on the top cover (1) or the base (2).

3. The integrated multifunctional vacuum cooking machine according to claim 1, wherein the temperature measuring probe (61) is disposed on the base (2) or the top cover (1).

4. The integrated multifunctional vacuum cooking machine according to claim 1, wherein the temperature measuring assembly (6) further comprises a temperature measuring probe (24) provided below the heat conducting container (3).

5. The integrated multifunctional vacuum cooking machine according to claim 1, wherein a handle (31) is provided on an edge of the heat conducting container (3).

6. The integrated multifunctional vacuum cooking machine according to claim 1, wherein the heating assembly (5) comprises an electromagnetic heating coil (51) located below the heat conducting container (3) and located outside the chamber (21).

7. The integrated multifunctional vacuum cooking machine according to claim 6, wherein a plurality of heat dissipation areas (22) are provided at a bottom of the base (2).

8. The integrated multifunctional vacuum cooking machine according to claim 1, wherein an observation window (12) is formed in a surface of the top cover (1), and a transparent sealing plate (13) covering the observation window (12) is provided at a top of the top cover (1).

## Patentansprüche

1. Eine integrierte, multifunktionale Vakuumkochmaschine, bestehend aus:
einen Kochmaschinenkörper (8), der mit einem wärmeleitenden Behälter (3) versehen ist, der dazu ausgebildet ist, Lebensmittelmaterialien aufzunehmen, wobei der Kochmaschinenkörper (8) und der wärmeleitende Behälter (3) einen Vakuumhohlraum (9) definieren, der dazu ausgebildet ist, die Lebensmittelmaterialien zu verarbeiten;
einen Vakuumpumpensatz (4), der auf dem Kochmaschinenkörper (8) bereitgestellt ist und mit dem Vakuumhohlraum (9) in Verbindung steht;
eine Heizeinheit (5), die auf dem Kochmaschinenkörper (8) bereitgestellt und dazu ausgebildet ist, die Lebensmittel in dem Vakuumhohlraum (9) durch den wärmeleitenden Behälter (3) zu erhitzen;
eine Temperaturmessanordnung (6), die auf dem Kochmaschinenkörper (8) bereitgestellt und dazu ausgebildet ist, eine Temperatur der Lebensmittelmaterialien zu messen;
ein Steuersystem (7), das auf dem Kochmaschinenkörper (8) bereitgestellt und elektrisch mit dem Vakuumpumpensatz (4), der Heizeinheit (5) und der Temperaturmesseinheit (6) verbunden ist;
wobei der Kochmaschinenkörper (8) ein Unterteil (2) und eine obere Abdeckung (1) umfasst, eine nach unten vertiefte Kammer (21) in einer oberen Oberfläche des Unterteils (2) ausgebildet ist, der wärmeleitende Behälter (3) in der Kammer (21) angeordnet ist, die obere Abdeckung (1) dazu ausgebildet ist, die Kammer (21) zu öffnen und zu schließen, und die obere Abdeckung (1) und der wärmeleitende Behälter (3) den Vakuumhohlraum (9) definieren, wenn die obere Abdeckung (1) die Kammer (21) schließt;
**dadurch gekennzeichnet, dass**
die Temperaturmessanordnung (6) eine Temperaturmesssonde (61) umfasst, die in dem Vakuumhohlraum (9) vorgesehen ist, und elektrisch mit dem Steuersystem (7) verbunden ist und direkt in die Lebensmittelmaterialien eingeführt werden kann, und die Temperaturmesssonde (61) beweglich mit der oberen Abdeckung (1) verbunden ist und sich in dem Vakuumhohlraum (9) auf der Grundlage einer Anweisung des Steuersystems (7) bewegen kann.

2. Integrierte multifunktionale Vakuumkochmaschine nach Anspruch 1,
**dadurch gekennzeichnet, dass**
die Vakuumkochmaschine ferner einen Dichtungsring (11) umfasst, der dazu ausgebildet ist, den Vakuumhohlraum (9) abzudichten, wobei der Dichtungsring (11) an der oberen Abdeckung (1) oder dem Unterteil (2) angeordnet ist.

3. Integrierte multifunktionale Vakuumkochmaschine nach Anspruch 1,
**dadurch gekennzeichnet, dass**
der Temperaturmesssonde (61) am Unterteil (2) oder am Deckel (1) angeordnet ist.

4. Integrierte multifunktionale Vakuumkochmaschine nach Anspruch 1,
**dadurch gekennzeichnet, dass**
die Temperaturmessanordnung (6) ferner eine Temperaturmesssonde (24) umfasst, die unterhalb des wärmeleitenden Behälters (3) vorgesehen ist.

5. Integrierte multifunktionale Vakuumkochmaschine nach Anspruch 1,
**dadurch gekennzeichnet, dass**
ein Griff (31) an einem Rand des wärmeleitenden Behälters (3) vorgesehen ist.

6. Integrierte multifunktionale Vakuumkochmaschine nach Anspruch 1,
**dadurch gekennzeichnet, dass**
die Heizeinheit (5) eine elektromagnetische Heizspule (51) umfasst, die unterhalb des wärmeleitenden Behälters (3) und außerhalb der Kammer (21) angeordnet ist.

7. Integrierte multifunktionale Vakuumkochmaschine nach Anspruch 6,
**dadurch gekennzeichnet, dass**
an der Unterseite des Unterteils (2) eine Vielzahl von Wärmeabfuhrbereichen (22) vorgesehen sind.

8. Integrierte multifunktionale Vakuumkochmaschine nach Anspruch 1,
**dadurch gekennzeichnet, dass**
ein Beobachtungsfenster (12) in einer Oberfläche der oberen Abdeckung (1) ausgebildet ist und eine transparente Dichtungsplatte (13), die das Beobachtungsfenster (12) abdeckt, an einer Oberseite der oberen Abdeckung (1) vorgesehen ist.

## Revendications

1. Machine de cuisson sous vide multifonctionnelle intégrée, **caractérisée par le fait que** la machine de cuisson sous vide multifonctionnelle intégrée comprend :
- un corps de machine de cuisson (8) comportant un récipient thermoconducteur (3) configuré pour recevoir des matières alimentaires, le corps de machine de cuisson (8) et le récipient thermoconducteur (3) définissant une cavité sous vide (9) configurée pour traiter les matières alimentaires ;
- un ensemble pompe à vide (4) disposé sur le corps de machine de cuisson (8) et en communication avec la cavité sous vide (9) ;
- un ensemble chauffant (5) disposé sur le corps de machine de cuisson (8) et configuré pour chauffer les matières alimentaires dans la cavité sous vide (9) à travers le récipient thermoconducteur (3) ;
- un ensemble de mesure de température (6) disposé sur le corps de machine de cuisson (8) et configuré pour mesurer une température des matières alimentaires ; et
- un système de commande (7) disposé sur le corps de machine de cuisson (8) et connecté électriquement à l'ensemble pompe à vide (4), à l'ensemble chauffant (5) et à l'ensemble de mesure de température (6) ;
- dans lequel le corps de machine de cuisson (8) comprend une base (2) et un couvercle supérieur (1), une chambre (21) en retrait vers le bas est formée dans une surface supérieure de la base (2), le récipient thermoconducteur (3) est disposé dans la chambre (21), le couvercle supérieur (1) est configuré pour ouvrir et fermer la chambre (21), et le couvercle supérieur (1) et le récipient thermoconducteur (3) définissent la cavité sous vide (9) lorsque le couvercle supérieur (1) ferme la chambre (21) ;
**caractérisé par le fait que** l'ensemble de mesure de température (6) comprend une sonde de mesure de température (61) disposée dans la cavité sous vide (9), et est connectée électriquement au système de commande (7) et apte à être introduite directement dans les matières alimentaires, et que la sonde de mesure de température (61) est reliée de manière mobile au couvercle supérieur (1) et apte à se déplacer dans la cavité sous vide (9) conformément à une instruction du système de commande (7).

2. Machine de cuisson sous vide multifonctionnelle intégrée selon la revendication 1, comprenant en outre une bague d'étanchéité (11) configurée pour sceller la cavité sous vide (9), la bague d'étanchéité (11) étant disposée sur le couvercle supérieur (1) ou la base (2).

3. Machine de cuisson sous vide multifonctionnelle intégrée selon la revendication 1, dans laquelle la sonde de mesure de température (61) est disposée sur la base (2) ou le couvercle supérieur (1).

4. Machine de cuisson sous vide multifonctionnelle intégrée selon la revendication 1, dans laquelle l'ensemble de mesure de température (6) comprend en outre une sonde de mesure de température (24) disposée sous le récipient thermoconducteur (3).

5. Machine de cuisson sous vide multifonctionnelle intégrée selon la revendication 1, dans laquelle une poignée (31) est disposée sur un bord du récipient thermoconducteur (3).

6. Machine de cuisson sous vide multifonctionnelle intégrée selon la revendication 1, dans laquelle l'ensemble chauffant (5) comprend un serpentin de chauffage électromagnétique (51) situé sous le récipient thermoconducteur (3) et situé à l'extérieur de la chambre (21).

7. Machine de cuisson sous vide multifonctionnelle intégrée selon la revendication 6, dans laquelle plusieurs zones de dissipation de chaleur (22) sont disposées à une partie inférieure de la base (2).

8. Machine de cuisson sous vide multifonctionnelle intégrée selon la revendication 1, dans laquelle une fenêtre d'observation (12) est formée dans une surface du couvercle supérieur (1), et une plaque d'étanchéité transparente (13) couvrant la fenêtre d'observation (12) est disposée à une partie supérieure du couvercle supérieur (1).
